**Europäisches Patentamt**

**European Patent Office**

**Office européen des brevets**

(19)

(11) Publication number: **0 006 258**
**A1**

## (12) EUROPEAN PATENT APPLICATION

(21) Application number: **79200274.3**

(22) Date of filing: **05.06.79**

(51) Int. Cl.³: **F 16 B 7/14**

(30) Priority: **19.06.78 BE 868225**

(43) Date of publication of application: **09.01.80**
**Bulletin 80/1**

(84) Designated Contracting States: **CH DE FR GB IT NL SE**

(71) Applicant: **van Eenaeme, Edwin Roger,**
**Ooievaarlaan 20, B-8900 Ieper (BE)**

(72) Inventor: **van Eenaeme, Edwin Roger, Ooievaarlaan 20,**
**B-8900 Ieper (BE)**

(74) Representative: **Bockstael, Marius Florimond Jean et**
**al, Arenbergstraat 13, B-2000 Anvers (BE)**

(54) Device for clamping tubes sliding in each other in any desired position relative to each other.

(57) Device for clamping tubes sliding in each other in any desired position relative to each other, characterized in that it comprises substantially a clamping journal (3) projecting from a tube (2) and a clamping ring (4) fitted on the projecting portion (7) of said journal (3) so that by rotating the tubes (1—2) relative to each other, the clamping journal (3) causes the said clamping ring (4) to be expanded and firmly pressed against the inner wall of the outer tube (1), thereby fixedly clamping the tubes (1—2) relative to each other.

1

Device for clamping tubes sliding in each other in any desired position relative to each other.

This invention relates to a device for clamping tubes sliding in each other in any desired position relative to each other, in other wordts a device allowing to secure two or more telescopic tubes according to a suitable length relative to each other as a function of the momentary desires or requirements, or for mounting interchangeable tools or objects on a handle, e.g. for using a handle with a brush, a painting roll, a garden tool, etc.

It is apparent that such a device may be used very effeciently in a very large number of applications such as for slidable handles for cleaning tools, housekeeping tools and the like, handles for parasols, shelves, fishing-rods, handles for interchangeable garden tools, holders for microphones, curtainrods, furniture legs, cranks, etc.

This invention concerns a very simple clamping device whereby a slight rotation of one tube relative to the other is sufficient to connect both tubes or objects sliding in each other in their suitable relative position so that they cannot be moved axially relative to each other and, in a particular embodiment, this device will be designed so that, in spite of a very efficient mutual clamping of both tubes, the latter may be connected with each other as well by left-hand rotation as by right-hand rotation, on one hand, while through overcoming the clamping in any rotating direction, these

2    0006258

tubes are released again, on the other hand.

In fact, the latter application is very important when such device is used for purposes in which it is very difficult for some people to remember whether such tubes must be rotated leftwards or rightwise relative to each other in order to be connected with each other or released from each other and also for such applications which are generally carried out by right-handers, but are used by left-handers.

This device comprises mainly a journal secured on one end of the tube having the smaller diameter, projecting from said tube, and a clamping ring fitted on the said projecting portion of the journal and the outer diameter of which is larger than the outer diameter of the said smaller tube, but equal or somewhat smaller than the inner diameter of the outermost tube in which said journal is slidably mounted, said clamping ring being thereby non rotatable relative to the outer tube, so that when rotating the said tubes relative to each other, the journal causes the said clamping ring to be expanded and firmly pressed against the inner wall of the outer tube, thereby securing the tubes fixedly relative to each other.

In order to make more clearly apparent the characteristics of the invention, some preferred embodiments of a device according to the invention will be described hereafter by way of example and without any limitation, reference being made to  the enclosed drawings in which :

      Figure 1 is a side view with partial cross-section and in a loose state of two tubes provided with a clamping device according to the invention;
      Figures 2 and 3 are respectively cross-sections taken on the lines II-II and III-III of Figure 1;
      Figure 4 is a view similar to that of Figure 1, but wherein the said tubes are firmly connected with each other;

Figures 5 and 6 are respectively cross-sections taken on the lines V-V and VI-VI of Figure 4;

Figure 7 is a view similar to that of Figure 1, but showing a modified embodiment of the clamping device;

Figure 8 is a cross-section taken on the line VIII-VIII of Figure 7;

Figure 9 is a view similar to that of Figure 7, but wherein the concerned tubes are firmly connected with each other;

Figure 10 is a cross-section taken on the line X-X of Figure 9;

Figure 11 is still a view similar to that of Figure 1, but showing a modified embodiment;

Figure 12 is a cross-section taken on the line XII-XII of Figure 11;

Figure 13 is a perspective view of a modified embodiment of the clamping according to the invention;

Figure 14 is a view taken according to the arrow F14 in Figure 13;

Figure 15 is a view similar to that of Figure 14, but showing a modified embodiment.

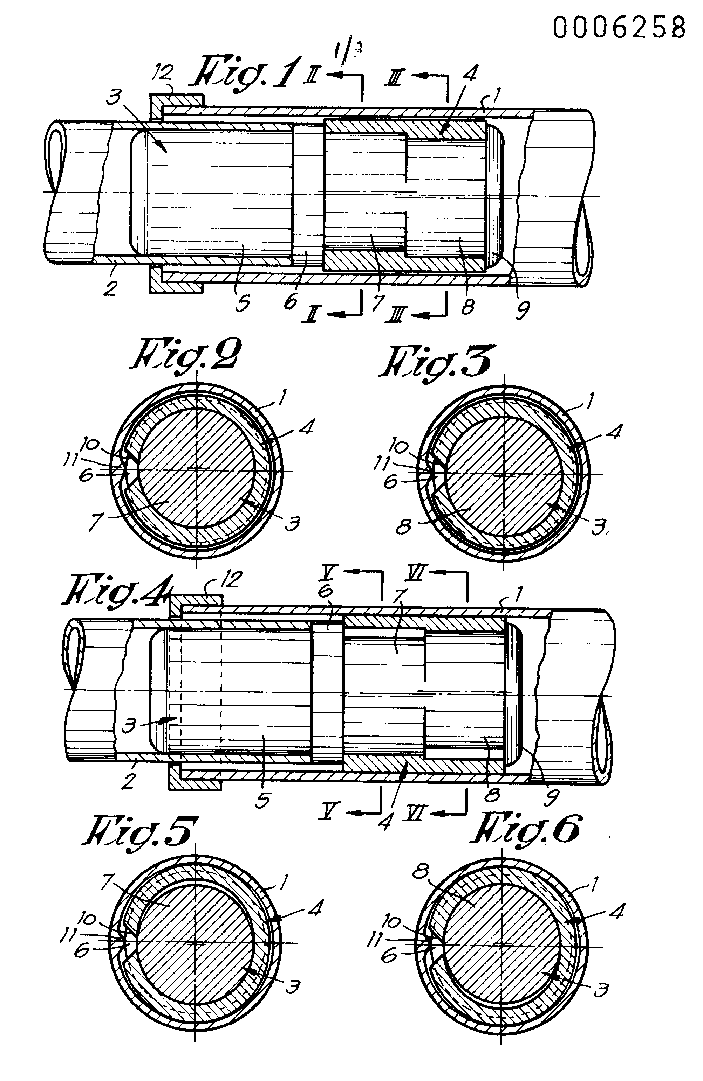

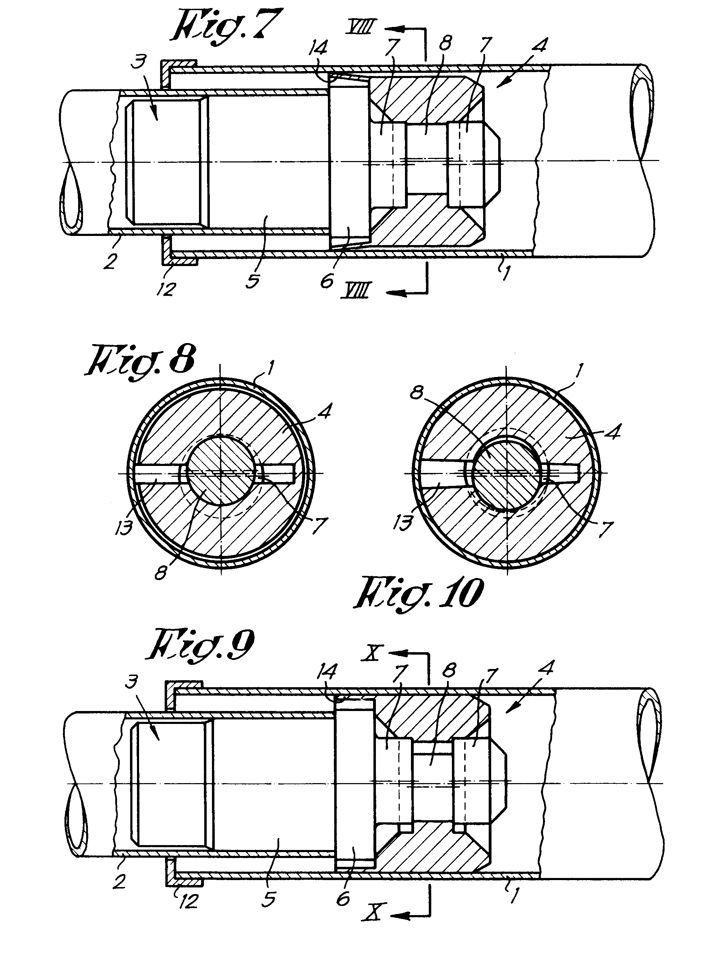

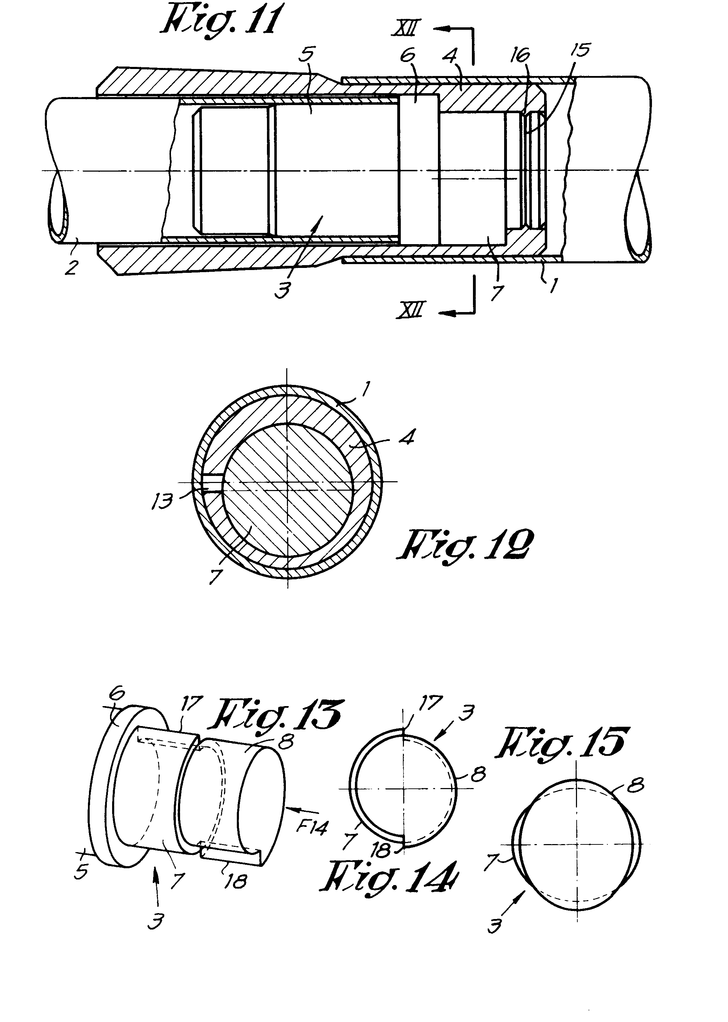

Figures 1 to 6 show two tubes 1 and 2 respectively having such inner and outer diameters that may freely slide relative to each other, e.g. in order to adjust the length of the element, the tool, the furniture fitting or the like of which said tubes 1 and 2 are making part.

According to the present invention, there is provided a clamping device allowing to firmly connect the said tubes with each other in any relative position, whereby said device may, in loose state, freely slide together with the tube of the smaller diameter in the tube having the larger diameter and cooperating, in the clamping state, with the inner wall of the said outer tube.

The clamping device according to the invention comprises mainly a clamping journal 3 and a clamping ring 4 cooperating with said clamping journal.

The clamping journal 3 is principally formed with a cylindrical portion 5 which may be suitably secured in the tube 2, e.g. by press-fitting, a flange 6 being provided as a stop against the end of the concerned tube, the outer diameter of said flange 6 being preferably equal to the outer diameter of the tube 2.

In this embodiment, on said flange 6, is secured a first cylindrical portion 7 the axial line of which is eccentrically situated relative to the axial line of the tube 2, the other end of said portion 7 being provided with a second cylindrical portion 8 the axial line of which is also eccentrically situated relative to the axial line of the tube 2, but being rotated under a determined angle (in that case 180°) relative to the portion 7. In addition, the free end of said portion 8 is provided with a flange 9 the outer diameter of which is preferably equal to or smaller than the outer diameter of said tube 2.

Between the flanges 6 and 9 and on the portions 7 and 8, is fitted the said clamping ring 4 the outer diameter of which is larger that the outer diameter of the tube 2, but is equal, slighly fitting or somewhat smaller than the inner diameter of the tube 1, said ring being provided with two cylindrical holes the diameter of which is equal to or slightly smaller than the diameter of the said cylindrical portions 7 and 8, said holes being situated with the same eccentricity as the said portions 7 and 8.

It is apparent that, instead of only one clamping ring, two clamping rings may be also used in that case. In order to allow the expansion of said clamping ring 4, the latter will be preferably provided with a slit 10. In addition, the ring 4 which is in fact secured to the tube 2 will be designed so that it cannot rotate relative to the longitudinal direction of the tube 1 and in any relative position thereof.

In the case of a welded tube, the seam 11 thereof will coope- a rate with the slit 10 oriented according to the longidutinal direction of the clamping ring whereas, in the case of non-welded tubes, the clamping ring 4 will be, in the relieved state, slightly larger than the inner diameter of the outer tube, thereby still securing said ring within the tube.

According to the material chosen for the clamping ring, the split can be omitted and, in that case, there will be provided a recess which may cooperate with the seam or impress 11.

It is apparent that, in the state shown in Figures 1 to 3, the tubes 1 and 2 are free relative to each other and that they may freely slide relative to each other, the slit 10 following always the seam or similar 11, while the free end of the tube 1 is provided with a small cap 12 the inner diameter of which is approximately equal to the outer diameter of the tube 2 and functions as a guide.

When the desired length of the tube 1 and 2 relative to each other is adjusted at a determined time, the said tubes will be rotated relative to each other in any direction, thereby modifying the relative position of said portions 7 and 8 and the clamping ring 4 so that the eccentricity of said portions 7 and 8 causes the clamping ring 4 (see Figures 4 to 6) to be expanded, thereby very firmly clamping the said ring 4 on the inner wall of the tube 1.

In order to remove the tubes from each other, it is sufficient to rotate the said tubes relative to each other in any direction.

6

0006258

Figures 7 to 10 show a modified embodiment in which the clamping journal 3 has then two portions 7 and one portion 8, said portions 7 being each provided at one end of the portion 8 so that owing to this symmetrical arrangement, the tubes or the like 1 and 2 always remain in a purely concentric position.

In that case, the clamping ring 4 is provided with a groove 13 whereby it may be closely fitted in the tube 1, while there is also provided a small annular conical flange 14 disposed between the tube 1 and the flange 6 in order to exert an additional pressure on the tube 1, thereby preventing the co-rotation of the clamping ring 4 with the clamping journal 3 in the case of seamless tubes.

In the embodiment shown in Figures 11 and 12, the clamping journal 3 has only one eccentric portion 7, a portion of the clamping journal 3 being then provided with a slot 15 cooperating with a rib of the clamping ring 4 in order to axially secure the clamping journal and the clamping ring relative to each other.

Figures 13 and 14 show still a modified embodiment in which the portions 7 and 8 are each provided with a tooth 17 18 respectively and, in that case, the concerned bores provided in the clamping ring 4 will be brought into registry and also provided with a stop with which the teeth 17 and 18 may cooperate.

Finally, Figure 15 shows diagrammatically an embodiment in which the portions 7 and 8 are oval and rotated, e.g. of 90° relative to each other. In that case also, a corresponding oval transition will be also provided in the clamping ring 4 for each portion 7 and 8.

In that case, a maximum clamping is obtained with a rotation of only 90°. It should be still noted that the clamping

0006258

device may be also provided with a stop at the most stressing location.

It is apparent that there is thereby obtained a device allowing to efficiently determine the length of telescopic elements, e.g. tubes and to very simply secure the latter with each other.

1

0006258

Claims.

1. Device for clamping tubes sliding in each other in any desired position relative to each other, characterized in that it comprises substantially a journal or clamping journal (3) secured on one end of the tube (2) of the smaller diameter and projecting from said tube, and a clamping ring (4) fitted on the said projecting portion of the clamping journal (3) and the outer diameter of which is larger than the outer diameter of the said smaller tube (2), but is equal or somewhat smaller than the inner diameter of the outer tube (1), said clamping journal (3) being slidable and said clamping ring (4) being non rotatable relative to the outer tube (2) so that when rotating the said tubes (1-2) relative to each other, the clamping journal (3) causes the said clamping ring (4) to be expanded and firmly pressed against the inner wall of the outer tube (1), thereby clamping fixedly the tubes (1-2) relative to each other.

2. Device according to claim 1, characterized in that the said portion on the clamping journal (3) which projects from the tube (2) having the smaller diameter partially formed by at least one cylindrical portion (7) which is however eccentrically situated relative to the axial line of the tube structure and on which is fitted the said clamping ring (4), the latter being provided with a bore situated in registry with the said eccentric portion (7) of the clamping journal (3).

3. Device according to one of the preceding claims, characterized in that the outer wall of the clamping ring (4) is provided with a recess oriented according to the axial line thereof.

4. Device according to one of the claims 1 to 3, characterized in that the clamping ring (4) is provided with a slit (10) which is oriented according to the axial line of the clamping ring (4).

5. Device according to one of the claims 1 to 4, characterized in that the whole length of the said outer tube (1) is provided with an impress which may cooperate with the recess or slit (10) provided in the clamping ring (4).

6. Device according to one of the claims 1 to 4, characterized in that the said outer tube (1) consists of a welded tube, the internal seam (11) of said tube having the possibility to cooperate with the said recess or slit (10) provided in the clamping ring (4).

7. Device according to one of the claims 1 to 4, characterized in that the outer diameter of the clamping ring (4), in the relieved state, is somewhat larger than the inner diameter of the outer tube (1).

8. Device according to one of the preceding claims, characterized in that the free end of the outer tube (1) is provided with a small cap (12) the inner diameter of which is substantially equal to the outer diameter of said inner tube.

9. Device according to one of the claims 1 to 8, characterized in that, in the case of two or more eccentrically situated portions (7-8) of the clamping journal (3) projecting from the smaller tube (2) and with which may cooperate the clamping ring (4), the eccentricity of said portions (7-8) is disposed under an angle relative to each other.

10. Device according to one of the preceding claims, characterized in that the said journal (3) is formed by a cylindrical portion (5) which may be press-fitted in the tube (2) having the smaller diameter, a flange (6) being fitted on said cylindrical portion (5) and having a diameter which is equal or substantially equal to the outer diameter of said smaller tube (2), one or several eccentric portions (7) being successively disposed behind each other.

11. Device according to one of the preceding claims, characterized in that the clamping ring (4) is provided with a small annular flange (14) surrounding the said flange (6)provided on the clamping journal (3).

12. Device according to one of the preceding claims, characterized in that the clamping journal (3) comprises one or several oval portions (7).

13. Device according to one of the claims 1 to 10, characterized in that the clamping journal (3) comprises one or several half oval portions or cams (7).

14. Any industrial product using a device according to one of the preceding claims.

0006258

**Fig.7**

**Fig.8**

**Fig.9**

**Fig.10**

Fig. 11

Fig. 12

Fig. 13

Fig. 14

Fig. 15

0006258

## European Patent Office

## EUROPEAN SEARCH REPORT

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| X | US - A - 4 076 437 (MAZZOLLA) <br> * Columns 2,3; figures * | 1-3,5, 10,14 | F 16 B 7/14 |
| | -- | | |
| X | FR - A - 433 887 (KENNGOTT) <br> * Page 1; figures * | 1,4,5, 8 | |
| | -- | | |
| X | FR - A - 1 398 845 (GARCIA) <br> * Page 1, right-hand column; page 2, left-hand column; figures * | 1,2,8, 10 | |
| | | | TECHNICAL FIELDS SEARCHED (Int.Cl.²) |
| | -- | | F 16 B 7/00 |
| | US - A - 3 419 293 (CONRAD) <br> * Column 1, lines 66-71; column 2, lines 1-70; figures * | 1,2,4, 8,10 | |
| | -- | | |
| | US - A - 3 596 946 (BURTON) <br> * Column 2, lines 20-75; column 3, lines 1-34; figures * | 1,2,4, 8,10 | |
| | -- | | |
| | DE - B - 1 283 696 (STONE MANGA-NESE MARINE) <br> * Column 3, lines 46-54; figure 1 * | 9 | CATEGORY OF CITED DOCUMENTS |
| | | | X: particularly relevant |
| | ---- | | A: technological background |
| | | | O: non-written disclosure |
| | | | P: intermediate document |
| | | | T: theory or principle underlying the invention |
| | | | E: conflicting application |
| | | | D: document cited in the application |
| | | | L: citation for other reasons |
| | | | &: member of the same patent family, corresponding document |

The present search report has been drawn up for all claims

| Place of search | Date of completion of the search | Examiner |
|---|---|---|
| The Hague | 07-09-1979 | FLORES |